# EUROPEAN PATENT SPECIFICATION

(11) **EP 1 281 688 B1**
(45) Date of publication and mention of the grant of the patent: **13.10.2004**
(21) Application number: 02255041.2
(22) Date of filing: 17.07.2002
(51) Int. Cl.: C03C 10/00, G02B 1/00, G02B 5/08, F21V 7/22

(54) **Glass-ceramic and reflecting mirror substrate**
Glaskeramik und Substrat für Reflexionsspiegel
Vitrocéramique et substrat de miroir réfléchissant

(30) Priority: 30.07.2001 JP 2001228984; 28.11.2001 JP 2001362117
(43) Date of publication of application: 05.02.2003
(73) Proprietor: NGK INSULATORS, LTD., Nagoya City Aichi Pref. (JP); NGK OPTOCERAMICS CO., LTD., Komaki-shi, Aichi 485-8557 (JP)
(72) Inventor: Ota, Takashi, Intellectual Property Dept., Nagoya-shi, Achi-ken, 467-8530 (JP); Watanabe, Atushi, Intellectual Property Dept., Nagoya-shi, Achi-ken, 467-8530 (JP); Ohtoh, Kazuki, Ngk Optoceramics Co., Ltd., Komaki-shi, Aichi 485-8557 (JP)
(74) Representative: Paget, Hugh Charles Edward

(56) References cited:
- US-A- 4 341 872
- US-A- 5 695 725
- PATENT ABSTRACTS OF JAPAN vol. 017, no. 207 (P-1525), 22 April 1993 (1993-04-22) & JP 04 348302 A (OKAMOTO GARASU KK), 3 December 1992 (1992-12-03)

## Description

### Background of the Invention

### 1. Technical Field to Which the Invention Pertains

The present invention relates to glass-ceramic, and to a substrate of a reflecting mirror (hereinafter may be referred to as "reflecting mirror substrate"), the substrate being formed from the glass-ceramic.

### 2. Background Art

Glass-ceramic, exhibiting excellent heat resistance, is a useful material for forming various apparatus parts used at high temperature. Typical examples of the apparatus parts used at high temperature include a reflecting mirror. Together with a light source lamp mounted thereon, the reflecting mirror constitutes an illumination apparatus. Since the temperature of the reflecting mirror rises by heat generated from the light source lamp, the reflecting mirror is required to have high heat resistance. Therefore, a substrate of the reflecting mirror must exhibit high heat resistance. Conventional reflecting mirror substrates are generally formed from Pyrex (registered trademark) glass exhibiting excellent heat resistance.

In recent years, light source lamps of high luminance have been employed in illumination apparatuses and cineprojectors. In accordance with this trend, a reflecting mirror which constitutes an illumination apparatus employing a light source lamp of high luminance is required to have enhanced heat resistance.

In order to meet such a requirement, Japanese Patent Publication (*kokoku*) No. 7-92527 discloses a reflecting mirror substrate formed from glass-ceramic containing, as primary components, a β-spodumene solid solution and a β-eucryptite solid solution. Since the glass-ceramic, which is known as low-expansion glass-ceramic, exhibits excellent heat resistance, a reflecting mirror of high heat resistance can be formed from the glass-ceramic.

US Patent No. 5786286 discloses a reflecting mirror substrate formed from another type of glass-ceramic. Unlike the aforementioned reflecting mirror substrate, the substrate disclosed in this patent is not used at high temperature. The substrate is formed from glass-ceramic containing hexacelsian as a primary crystal phase and having a degree of crystallinity of about 50%, and has a thermal expansion coefficient α (× 10⁻⁷/°C) as high as 78 to 88.

In the course of formation of the aforementioned substrates, glass raw materials of the glass-ceramics must be melted at a temperature as high as 1,500°C or more, since the glass raw materials have high melting points. The substrates are formed by means of a forming method, such as press forming, roll forming, casting, or blow forming. In such a forming method, since glass raw materials are melted at 1,500°C or higher prior to formation of a substrate, the surface of a forming die to be employed is oxidized, and the surface is roughened at an early stage, resulting in shortening of the service life of the forming die.

Particularly, when the surface of a forming die is roughened, the resultant substrate fails to have a desired surface roughness. When the surface of the forming die is roughened, in order to impart a predetermined surface roughness to a substrate to be formed, the forming die must be exchanged for a new forming die at an early stage, resulting in a great increase in costs required for preparing a large number of forming dies to be exchanged and costs required for operation of exchange of forming dies.

US 4341872 describes a glass-ceramic having a nepheline crystal phase with an optional secondary celsian or hexacelsian crystal phase.

### Summary of the Invention

In JP-A-2002-109923, the present applicant has proposed a reflecting mirror exhibiting excellent heat resistance, in which the substrate of the mirror is formed from glass-ceramic containing primary components differing from those of glass-ceramic containing a β-spodumene solid solution and a β-eucryptite solid solution, and exhibiting heat resistance similar to that of the glass-ceramic.

The reflecting mirror includes a glass-ceramic substrate and a thin reflection film deposited on the substrate. The substrate is formed from glass-ceramic having celsian as a primary crystal phase and containing SiO₂, Al₂O₃, and BaO as primary components and TiO₂ as a crystal nucleus component, and has a thermal expansion coefficient α (× 10⁻⁷/°C) of 30 to 45. The reflecting mirror does not involve the aforementioned problems attributed to formation of a reflecting mirror substrate, and exhibits excellent heat resistance.

The present inventors have conducted further studies on the glass-ceramic having celsian as a primary crystal phase and containing SiO₂, Al₂O₃, BaO, and TiO₂ as primary components, the glass-ceramic constituting the aforementioned reflecting mirror substrate, and have found that Li₂O serving as a specific modification component greatly contributes to crystal formation in the glass-ceramic, and that glass-ceramic containing no hexacelsian crystals or very small amounts of hexacelsian crystals; i.e., glass-ceramic whose crystal phase is substantially formed of celsian alone can be obtained by varying the Li₂O content of the glass-ceramic.

The present invention has been accomplished on the basis of this finding. An object of the present invention is to provide a very useful glass material for forming apparatus parts exhibiting excellent heat resistance, mechanical strength, and optical properties; and a substrate which is formed from the glass material and constitutes a reflecting mirror of high quality.

The present invention relates to a glass-ceramic, and according to the present invention, there is provided a glass-ceramic as set out in claim 1.

K₂O may be used as a further modification component the amount of K₂O being 1.5 wt.% or less.

Each of the glass-ceramics of the present invention may also comprise one or more modification components selected from the group consisting of Na₂O, P₂O₅, B₂O₃, Sb₂O₃, ZnO, and Bi₂O₃.

The present invention also relates to a reflecting mirror substrate. The reflecting mirror substrate of the present invention is a substrate on which a thin reflection film is deposited to thereby form a reflecting mirror, the substrate being formed from the glass-ceramic of the present invention.

In the reflecting mirror substrate of the present invention, preferably, the glass-ceramic constituting the substrate has a thermal expansion coefficient α (× 10⁻⁷/°C) of 30 to 45, and the glass-ceramic has a crystal grain size of 0.1 to 1 µm.

The reflecting mirror substrate of the present invention can have flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C.

In the reflecting mirror substrate of the present invention, preferably, the shortest wavelength of light which passes through the glass-ceramic constituting the substrate is at least 800 nm when the glass-ceramic has a thickness of 0.1 mm, and the wavelength of light which passes, at a transmittance of 50%, through the glass-ceramic constituting the substrate is at least 850 nm when the glass-ceramic has a thickness of 0.1 mm.

The reflecting mirror substrate of the present invention can have flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C, wherein the shortest wavelength of light which passes through the glass-ceramic constituting the substrate is at least 800 nm when the glass-ceramic has a thickness of 0.1 mm, and the wavelength of light which passes, at a transmittance of 50%, through the glass-ceramic constituting the substrate is at least 850 nm when the glass-ceramic has a thickness of 0.1 mm.

In the reflecting mirror substrate of the present invention exhibiting the aforementioned properties, which has a thickness of 3 to 6 mm, the shortest wavelength of light which passes through the glass-ceramic constituting the substrate is at least 850 nm, and preferably, the shortest wavelength of light which passes through the glass-ceramic constituting the substrate is at least 1,000 nm.

In the glass-ceramic of the present invention, the small amount of Li₂O, serving as an essential modification component, enhances meltability of the glass, promotes precipitation of celsian crystals, and increases the rate of growth of the celsian crystals. Therefore, by virtue of the synergistic effect of the primary components and the modification component, the melting point of the glass raw material of the glass-ceramic decreases to 1,450°C or lower, which is considerably lower than the melting point of the glass raw material of the aforementioned conventional glass-ceramic; i.e., 1,500°C or higher. The glass-ceramic is substantially formed of a celsian crystal phase alone, by virtue of a crystallization temperature as low as at least 800°C. The glass-ceramic of the present invention may include a small amount of K₂O, which is added as a modification component together with Li₂O to aid the function of Li₂O.

Therefore, the glass-ceramic of the present invention is a very useful glass material for forming various apparatus parts exhibiting excellent heat resistance, mechanical strength, and optical properties, and is a suitable material for forming such apparatus parts. The glass-ceramic is a suitable material for forming, for example, a reflecting mirror substrate, which is generally formed from a glass material.

When the glass-ceramic is formed into an apparatus part, the melting temperature of the glass raw material of the glass-ceramic can be determined to be 1,450°C or lower, which is considerably lower than that of a conventional glass raw material (i.e., 1,500°C or higher). Therefore, in the course of formation of the apparatus part, oxidation of the surface of a forming die to be employed, which is attributed to heating at a high temperature, can be prevented, and roughening of the surface of the die at an early stage can be prevented, resulting in lengthening of the service life of the forming die. As a result of lengthening the service life of the forming die, the frequency of exchange of forming dies can be reduced, and the number of forming dies to be prepared for exchange can be greatly reduced, contributing to great reduction in costs required for preparing forming dies and costs required for operation of exchange.

Furthermore, since roughening of the surface of the forming die can be prevented, the following advantages are obtained: the roughness of the surface of the forming die, which is determined in accordance with the surface roughness as desired of an apparatus part to be formed, can be maintained for a long period of time; an apparatus part having a desired surface roughness can be easily formed; and apparatus parts having an appropriate surface roughness can be reliably formed over a long period of time.

The glass-ceramic of the present invention is a suitable material for forming a substrate on which a thin reflection film is deposited to thereby form a reflecting mirror (i.e., a reflecting mirror substrate). The thermal expansion coefficient α (× 10⁻⁷/°C) of the glass-ceramic for forming the reflecting mirror substrate can be determined to be 30 to 45, and the crystal grain size of the glass-ceramic can be determined to be 0.1 to 1 µm. Therefore, the reflecting mirror substrate exhibits further excellent mechanical properties, thermal properties, and optical properties. A reflecting mirror including the substrate is suitably employed for a high-functional light source lamp of high luminance which generates a considerable amount of heat, and the reflecting mirror can be used over a long period of time.

In the present invention, when compositions of glass raw materials are varied, and crystallization temperature, etc. are regulated, various glass-ceramics of different properties, such as different values of flexural strength, elastic modulus, and light transmittance, can be formed. By selection of an outstandingly excellent glass-ceramic from among such glass-ceramics of different properties, provision of a high-quality reflecting mirror substrate exhibiting the below-described properties can be realized.

That is, there can be formed a reflecting mirror substrate of high durability exhibiting excellent mechanical properties and thermal properties, which has a flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C.

Also, there can be formed a reflecting mirror substrate exhibiting excellent optical properties, in which the shortest wavelength of light which passes through a glass-ceramic constituting the substrate is at least 800 nm when the glass-ceramic has a thickness of 0.1 mm, and the wavelength of light which passes, at a transmittance of 50%, through the glass-ceramic constituting the substrate is at least 850 nm when the glass-ceramic has a thickness of 0.1 mm.

Also, there can be formed a reflecting mirror substrate exhibiting all the aforementioned properties; i.e., a reflecting mirror substrate exhibiting excellent mechanical properties, thermal properties, and optical properties, which has a flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C, in which the shortest wavelength of light which passes through a glass-ceramic constituting the substrate is at least 800 nm when the glass-ceramic has a thickness of 0.1 mm, and the wavelength of light which passes , at a transmittance of 50%, through the glass-ceramic constituting the substrate is at least 850 nm when the glass-ceramic has a thickness of 0.1 mm.

In view of the features of the aforementioned reflecting mirror substrates, a most preferable reflecting mirror substrate exhibits all the aforementioned properties and has a thickness of 3 to 6 mm, in which the shortest wavelength of light which passes through a glass-ceramic constituting the substrate is at least 850 nm, preferably at least 1,000 nm. The reflecting mirror substrate exhibits further excellent mechanical properties, thermal properties, and optical properties.

### Brief Description of the Drawings

FIG. 1 is a graph showing the proportions of components of glass raw materials, and meltability and crystallization property of the glass raw materials when melted at 1,500°C.
FIG. 2 is a graph showing the results of studies on the proportions of components of the glass raw materials in the first zone (1) and the second zone (2) shown in the graph of FIG. 1.
FIG. 3 is a graph showing the relation between the amount of Li₂O constituting a glass product and the crystallization temperature and crystal phase of the glass product, when the amount of K₂O constituting the glass product is 0.5 wt.% or less.
FIG. 4 is a graph showing the relation between the amount of K₂O constituting a glass product and the crystallization temperature and crystal phase of the glass product, when the amount of Li₂O constituting the glass product is constant (0.4 wt.%).
FIG. 5 are electron micrographs of the inner surface of a product formed from a glass-ceramic.
FIG. 6 are electron micrographs of the inner surface of the product which has been crystallized at a temperature different from that of FIG. 5.
FIG. 7 are electron micrographs of the inner surface of the product which has been crystallized at a temperature different from those of FIGs. 5 and 6.
FIG. 8 are electron micrographs of the inner surface of another product formed from a glass-ceramic of another composition.
FIG. 9 are electron micrographs of the inner surface of said other product, the micrographs being taken at a different magnification.
FIG. 10 is a graph showing the relation between the shortest wavelength of light which passes through a product formed from a glass-ceramic and the thickness of the product.
FIG. 11 is a graph showing the relation between the wavelength and transmittance of light which passes through a product formed from a glass-ceramic.
FIG. 12 is a graph showing the relation between the wavelength and transmittance of light which passes through a product formed from a glass-ceramic.

### Embodiments of the Invention

The glass-ceramic of the present invention exhibits excellent heat resistance, mechanical strength, and optical properties, and is a very useful glass material for forming an apparatus part which must exhibit such properties.

The reflecting mirror substrate of the present invention is formed from the glass-ceramic of the present invention, exhibits excellent heat resistance, mechanical strength, and optical properties, and is very useful as a substrate of a reflecting mirror which must exhibit such properties.

The present inventors have focused on the requirement that, in order to impart excellent properties to a reflecting mirror which constitutes an illumination apparatus together with a light source lamp mounted on the mirror, the reflecting mirror must be formed of a substrate exhibiting excellent properties such as heat resistance, mechanical strength, and optical properties, and the substrate as well must be formed from a material exhibiting excellent properties such as heat resistance, mechanical strength, and optical properties. In view of the foregoing, the present inventors have performed studies on a suitable material for forming the reflecting mirror substrate.

On the basis of the realization that a glass-ceramic is a suitable material for forming a reflecting mirror substrate, the present inventors have focused on an SiO₂-Al₂O₃-BaO-based glass material which constitutes a glass-ceramic containing a crystal phase of celsian, and have performed tests in order to study the relation between components of the glass material, crystal phase, and thermal expansion coefficient α.

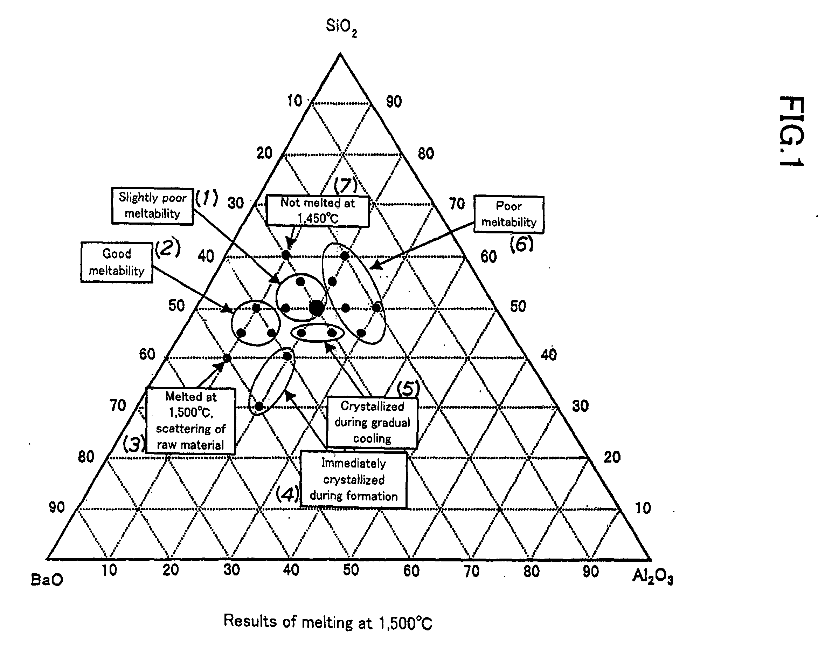

FIG. 1 shows the results of the tests, and is a graph showing the relation between the proportions of components of glass raw materials and the meltability and crystallization property of the glass raw materials. The graph shows the results of the tests in which glass raw materials containing SiO₂, Al₂O₃, and BaO as primary components (total amount: 100 wt.%) and TiO₂ as a crystal nucleus component (14 wt.%: excluded from the above total amount) are melted at 1,500°C. The graph shows seven specific zones; i.e., a first zone (1), a second zone (2), a third zone (3), a fourth zone (4), a fifth zone (5), a sixth zone (6), and a seventh zone (7), the seven zones corresponding to the glass raw materials melted at 1,450°C to 1,500°C.

Although glass raw materials in the first zone (1) exhibit slightly poor meltability at 1450°C, they are considered to exhibit excellent crystallization property and heat resistance. Glass materials in the second zone (2) exhibit good meltability. Although a glass raw material in the third zone (3) exhibits goodmeltability, it scatters while beingmelted. Although glass raw materials in the fourth zone (4) exhibit good meltability, they are immediately crystallized when formed into products. Although glass raw materials in the fifth zone (5) exhibit good meltability, products formed from the materials are crystallized when being gradually cooled. Glass materials in the sixth zone (6) exhibit poor meltability at 1,450°C. A glass raw material in the seventh zone (7) exhibits poor meltability, and is not melted at 1,450°C.

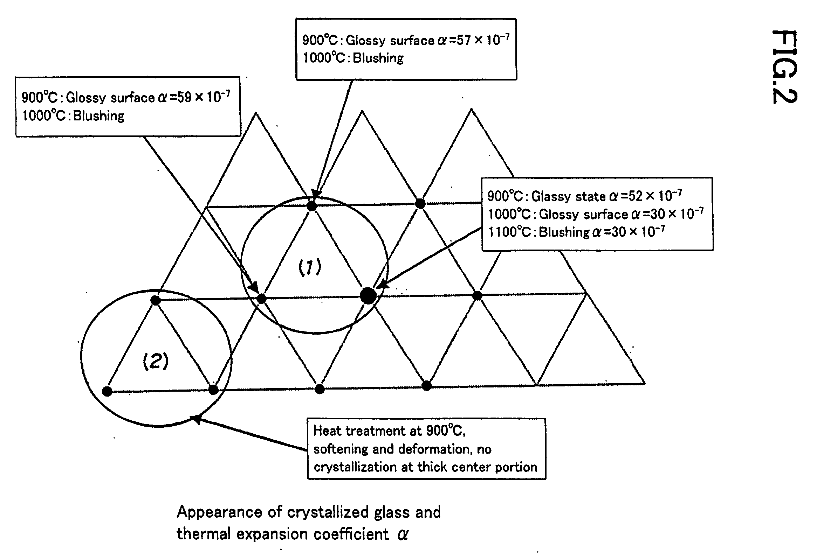

Further detailed studies have been conducted on the glass raw materials in the first zone (1) and the second zone (2), which are considered to exhibit excellent properties. FIG. 2 is a graph showing the results of the studies. FIG. 2 shows the results of the studies on the proportions of components of the glass raw materials in the first zone (1) and the second zone (2) shown in the graph of FIG. 1. The results show that although each of the glass raw materials in the second zone (2) exhibits good meltability at 1,450°C, when a product (i.e., a substrate) formed from the material is subjected to crystallization treatment (heat treatment) at 900°C, the product is softened and deformed, and the thick central portion of the product is crystallized only insufficiently.

Also, the results show that although the glass raw materials in the first zone (1) exhibit slightly poormeltability at 1,450°C, they exhibit good meltability at 1,500°C and exhibit excellent crystallization property and heat resistance. When the total amount of SiO₂, Al₂O₃, and BaO of the glass raw materials in the first zone (1) is taken as 100 wt.%, the proportions of these components are as follows: SiO₂: 50 to 55 wt.%, Al₂O₃: 15 to 20 wt.%, and BaO: 30 to 35 wt.%.

On the basis of the aforementioned results of the test, the present inventors have focused on an SiO₂-Al₂O₃-BaO-based glass material, and have performed further studies on reduction of the melting point of a glass raw material containing SiO₂, Al₂O₃, BaO, and TiO₂ as primary components, on crystallization property of a product formed from the glass raw material, and on heat resistance of the product after crystallization. As a result, the present inventors have found advantages as described below.

When at least Li₂O serving as a modification component is incorporated into a glass raw material containing the aforementioned components as primary components, the melting point of the glass raw material can be lowered to 1,450°C or lower, which is considerably lower than 1,500°C. A glass product formed from the glass raw material having such a low melting point can be transformed into a glass-ceramic containing celsian as a primary crystal phase through heat treatment, and can be formed into a product exhibiting high heat resistance; i.e., a product having a thermal expansion coefficient α (× 10⁻⁷/°C) of 30 to 45. In addition, when heating temperature; i.e., crystallization temperature is regulated, the glass product can be formed into a product exhibiting further excellent mechanical properties and optical properties.

A very small amount of Li₂O (a modification component) incorporated into the glass raw material enhances meltability of the glass raw material, promotes precipitation of celsian crystals, and increases the rate of growth of the celsian crystals. The Li₂O content of the glass raw material is preferably 0.05 to 1.0 wt.%. When the Li₂O content is less than 0.05 wt.%, meltability of the glass raw material is impaired, whereas when the Li₂O content exceeds 1.0 wt.%, devitrification property (optical property) is impaired during forming.

When at least Li₂O and K₂O serving as modification components are incorporated into a glass raw material containing the aforementioned components as primary components, Li₂O functions in the glass raw material as described above, and a small amount of K₂O aids the function of Li₂O. The K₂O content of the glass raw material is preferably 1.5 wt. % or less. When the K₂O content is high, precipitation of hexacelsian crystals as well as celsian crystals is promoted, resulting in deterioration of heat resistance and mechanical strength. Therefore, the K₂O content is preferably 1.5 wt.% or less, more preferably 0.0 to 1.0 wt.%.

A glass raw material containing the aforementioned components has a melting point of 1,450°C, which is considerably lower than 1,500°C. A glass product formed from the glass raw material having such a low melting point can, through heat treatment, be transformed into a glass-ceramic whose crystal phase is substantially formed of celsian alone, and can be formed into a product exhibiting high heat resistance; i.e., a product having a thermal expansion coefficient α (× 10⁻⁷/°C) of 30 to 45. In addition, since the size of crystal grains in the glass-ceramic of the glass product can be reduced to 0.1 to 1 µm; i.e., very fine crystal grains can be obtained, reflection property of the glass product can be enhanced considerably.

In the present invention, when compositions of glass raw materials are varied, and crystallization temperature is appropriately regulated within a range of, for example, 800 to 900°C, various glass-ceramics exhibiting different properties, such as flexural strength, elastic modulus, and transmittance, can be formed. By selection of an outstandingly excellent glass-ceramic for a reflecting mirror from among the glass-ceramics of different properties, provision of a reflecting mirror substrate of high quality can be realized. Such a glass raw material containing the aforementioned components may contain, in addition to Li₂O and K₂O, one or more modification components selected from the group consisting of Na₂O, B₂O₃, Sb₂O₃, ZnO, and Bi₂O₃.

In a manner similar to the case where a glass product is formed from a typical glass raw material, a glass raw material containing the aforementioned specific components is melted and fed to a forming die, and formed into a glass product having the same shape as a substrate by means of a forming method, such as press forming, roll forming, casting, or blow forming. When the glass product is formed, the melting temperature of the glass raw material can be regulated to 1,450°C or lower in consideration of the melting point of the material.

Since the melting temperature of the glass raw material can be regulated as described above, in the course of formation of the glass product, oxidation of the surface of the forming die can be prevented, and roughening of the surface of the die can be prevented to a great extent. Therefore, a proper roughness of the surface of the forming die, which is suitably adapted to the surface roughness of the glass product, can be maintained for a long period of time, and the surface roughness of the glass product can be regulated to a desired value of, for example, 0.03 µm or less, which is required for a reflecting mirror substrate. As used herein, the term "surface roughness" refers to "center-line average roughness Ra" as specified by JIS B0601.

A reflecting mirror substrate can be formed through the following procedure: a glass raw material containing the aforementioned components is melted and formed into a glass product; and the resultant glass product is subjected to heat treatment, to thereby crystallize the glass constituting the product. Crystallization treatment of the glass product is performed in a heating furnace. Typically, the glass product is heated at a rate of 100 to 300°C/hr to a temperature lower than the deformation temperature of the glass (e.g., 600 to 750°C) and heat treatment is performed at this temperature for one to three hours; and subsequently, the glass product is further heated to 800 to 1,100°C and heat treatment is performed at this temperature for one to three hours. The latter heat treatment is main crystallization treatment, and the temperature at which the crystallization treatment is performed is called "crystallization temperature."

Through this heat treatment, fine, uniform crystals are generated in the glass constituting the glass product, and the glass product is transformed into a glass-ceramic (i.e., a substrate) containing no hexacelsian crystals or very small amounts of hexacelsian crystals; i.e., a glass-ceramic whose crystal phase is substantially formed of celsian alone. When the amount of Li₂O or the amounts of Li₂O and K₂O in the glass product are varied appropriately, and when the heat treatment temperature (crystallization temperature) is determined appropriately, the glass product can be transformed into a glass-ceramic which is formed of a celsian crystal phase alone and contains no hexacelsian crystal phase.

A multi-layer thin reflection film is deposited on the surface of the substrate (reflecting mirror substrate) by means of a typical technique, to thereby form a reflecting mirror. The thus-formed reflecting mirror reflects scattering light at high reflectance, and transmits infrared rays. The infrared rays which pass through the reflecting mirror are scattered by means of the crystal structure of the glass-ceramic, thereby preventing an increase in the temperature of parts to be provided at the back of the reflecting mirror.

The reflecting mirror substrate of the present invention is formed from a glass-ceramic containing substantially a crystal phase of celsian alone, has a thermal expansion coefficient (× 10⁻⁷/°C) of as low as 30 to 45, and exhibits excellent heat resistance. Therefore, the reflecting mirror exhibits excellent thermal shock resistance, and can be employed at high temperature. In addition, since the size of crystal grains in the glass ceramic constituting the substrate can be reduced to 0.1 to 1.0 µm; i.e., very fine crystal grains can be obtained, the reflectance of the reflecting mirror can further be improved.

The present invention provides a first high-quality reflecting mirror substrate of high durability exhibiting excellent mechanical properties and thermal properties, and having a flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C.

The present invention also provides a second high-quality reflecting mirror substrate exhibiting excellent optical properties, in which the shortest wavelength of light which passes through a glass-ceramic constituting the substrate is at least 800 nm when the glass-ceramic has a thickness of 0.1 mm, and the wavelength of light which passes, at a transmittance of 50%, through the glass-ceramic constituting the substrate is at least 850 nm when the glass-ceramic has a thickness of 0.1 mm.

The present invention also provides a third high-quality reflecting mirror substrate exhibiting excellent mechanical properties, thermal properties, and optical properties, and having a flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C, in which the shortest wavelength of light which passes through a glass-ceramic constituting the substrate is at least 800 nm when the glass-ceramic has a thickness of 0.1 mm, and the wavelength of light which passes, at a transmittance of 50%, through the glass-ceramic constituting the substrate is at least 850 nm when the glass-ceramic has a thickness of 0.1 mm.

A preferred embodiment of the reflecting mirror substrate of the present invention has the aforementioned flexural strength and elastic modulus, and a thickness of 3 to 6 mm, and the shortest wavelength of light which passes through a glass-ceramic constituting the substrate is 850 nm, preferably 1,000 nm. According to the present invention, when the proportions of components of a glass raw material are appropriately varied and when crystallization temperature is appropriately determined, such a preferred reflecting mirror substrate can be easily formed.

A glass raw material having a melting point of 1,450°C or lower can be employed for forming the reflecting mirror substrate. When such a glass raw material is employed, in the course of formation of a glass product, the melting temperature of the glass material can be lowered to 1,450°C or lower, which is considerably lower than the melting temperature of a typical glass raw material (i.e., 1,500°C).

Therefore, since a forming die which is employed for forming the substrate is not used at a temperature as high as at least 1,500°C, oxidation of the surface of the die, which is attributed to heating at high temperature, can be prevented, resulting in prevention of roughening of the surface. Therefore, the service life of the forming die is lengthened, resulting in great reduction of costs required for preparing a large number of forming dies to be exchanged and costs required for operation of exchange of forming dies. Furthermore, since roughening of the surface of the forming die can be prevented, the roughness of the surface of the forming die, which is determined in accordance with a desired surface roughness (0.03 µm or less) of the substrate, can be maintained for a long period of time, and substrates having a surface roughness of 0.03 µm or less can be reliably formed over a long period of time.

The glass-ceramic constituting the substrate contains SiO₂, Al₂O₃, BaO, and TiO₂, which form the basic structure of the glass-ceramic. The amounts of SiO₂, Al₂O₃, BaO, and TiO₂ preferably fall within the ranges of 35 to 55 wt.%, 7 to 25 wt.%, 18 to 38 wt.%, and 8 to 15 wt.%, respectively. The amount of Li₂O (an essential modification component) contained in the glass-ceramic is 0.05 to 1.0 wt.%. K₂O (another modification component) is preferably present in the glass-ceramic.

In the glass-ceramic, K₂O functions as a crystallization aid, but, depending on the K₂O content, hexacelsian crystals may precipitate, along with celsian crystals. Therefore, in order to cause the glass-ceramic constituting the substrate to contain substantially a celsian crystal phase alone, the K₂O content of the glass-ceramic must be determined appropriately.

In order to reduce precipitation of hexacelsian crystals to a minimal level, the K₂O content of the glass-ceramic is determined to be 1.5 wt.% or less, preferably 1 wt.% or less, more preferably 0.5 wt.% or less. However, since K₂O has an ability to precipitate celsian crystals at low temperature, the glass-ceramic preferably contains K₂O in an amount of at least 50 ppm.

Preferred examples of additional modification components include ZnO, Bi₂O₃, Na₂O, and Sb₂O₃. ZnO reduces the thermal expansion coefficient of glass, and enhances chemical durability of the glass. The ZnO content of the glass is preferably 0.5 to 5 wt.%. Bi₂O₃ facilitates melting and refining of glass, and reduces the viscosity of the glass without affecting the thermal expansion coefficient. The Bi₂O₃ content of the glass is preferably 0.5 to 7 wt.%.

Na₂O facilitates melting and refining of glass, but reduces chemical durability of the glass, and increases the thermal expansion coefficient of the glass. The Na₂O content of the glass is preferably 0.5 to 3 wt.%. Sb₂O₃ reacts with oxygen from a nitrate at low temperature to thereby form Sb₂O₅, and the resultant Sb₂O₅ releases O₂ in melted glass so as to refine the glass. The Sb₂O₃ content of the glass is preferably 0.1 to 1 wt.%.

The glass-ceramic constituting the substrate contains a crystal phase substantially formed of celsian crystals alone. The grain size of the crystals (crystal grain size) is preferably 0.1 to 1 µm, more preferably 0.1 to 0.5 µm. When the crystal grain size is less than 0.1 µm, the strength of the substrate, which constitutes a reflecting mirror, is lowered, whereas when the crystal grain size exceeds 1 µm, a reflecting mirror including the substrate causes lowering of the intensity of light reflected from the mirror. When the crystal grain size is 0.5 µm, blue light (i.e., light of short wavelength) of reflected light scatters.

In a reflecting mirror including the substrate of the present invention, a glass-ceramic constituting the substrate contains the aforementioned components and is substantially formed of a celsian crystal phase alone. The thermal expansion coefficient α (× 10⁻⁷/°C) of the glass-ceramic can be 30 to 45, and the crystal grain size of the glass-ceramic can be 0.1 to 1.0 µm.

Therefore, as compared with the reflecting mirror disclosed in the aforementioned publication previously filed by the present applicant, the above reflecting mirror exhibits improved mechanical strength. In addition, the surface roughness of the reflecting mirror is further improved by virtue of fine crystal grains and uniform crystal grain size, to thereby reduce polishing of the surface, and the heat resistance and heat-resistant properties of the reflecting mirror are improved by virtue of the glass-ceramic substantially formed of a celsian crystal phase alone. Particularly, the reflecting mirror is improved in terms of impact resistance against thermal stress, and appropriate optical properties, such as reduction of transmittance of visible light, can be attained.

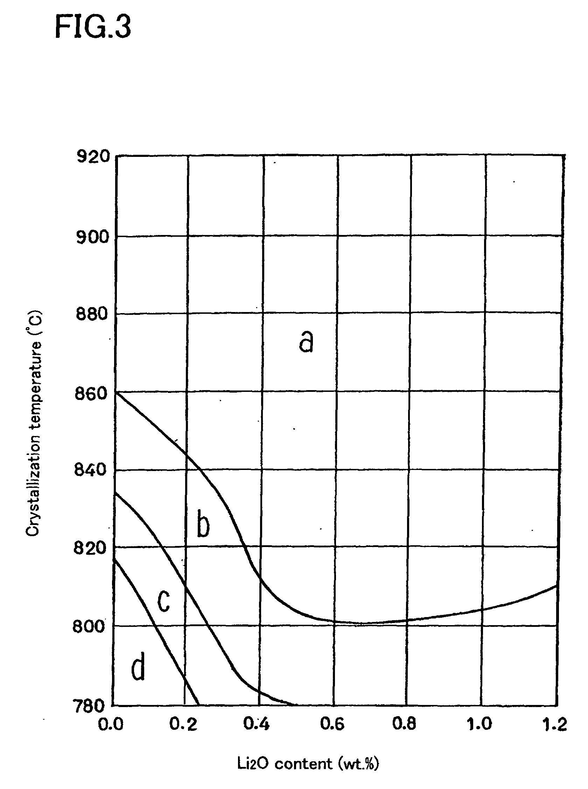

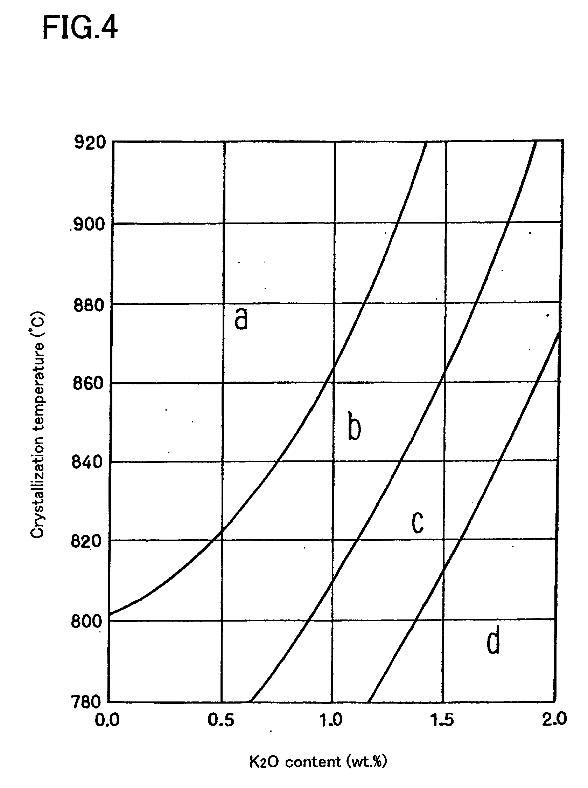

Graphs of FIGs. 3 and 4 show the results of Test 3 and Test 4 in the below-described Example, respectively. The graph of FIG. 3 shows the relation between amount of Li₂O constituting a glass product, and crystallization temperature and crystal phase of the glass product, when the amount of K₂O constituting the glass product is 0.5 wt.% or less. The graph of FIG. 4 shows the relation between amount of K₂O constituting a glass product, and crystallization temperature and crystal phase of the glass product, when the amount of Li₂O constituting the glass product is held constant (0.4 wt.%).

Each of these graphs is divided into four regions: region a, region b, region c, andregion d. In region a, a celsian crystal phase alone is present. In region b, a celsian cryastal phase and a hexacelsian crystal phase are present, and the amount of celsian crystals is greater than that of hexacelsian crystals. In region c, a celsian cryastal phase and a hexacelsian crystal phase are present, and the amount of celsian crystals is less than that of hexacelsian crystals. In region d, a hexacelsian crystal phase alone is present.

As shown in the graph of FIG. 3, when the amount of K₂O constituting a glass product falls within a range of 0 to 0.5 wt.%, the glass product can be transformed into a glass-ceramic containing a celsian crystal phase alone by appropriately varying the amount of Li₂O constituting the glass product and by appropriately determining the crystallization temperature. As shown in the graph of FIG. 4, when the amount of Li₂O constituting a glass product is held constant, the glass product can be transformed into a glass-ceramic containing a celsian crystal phase alone by appropriately varying the amount of K₂O constituting the glass product and by appropriately determining the crystallization temperature. When the amounts of Li₂O and K₂O and the crystallization temperature are determined, meltability of a glass raw material must be considered.

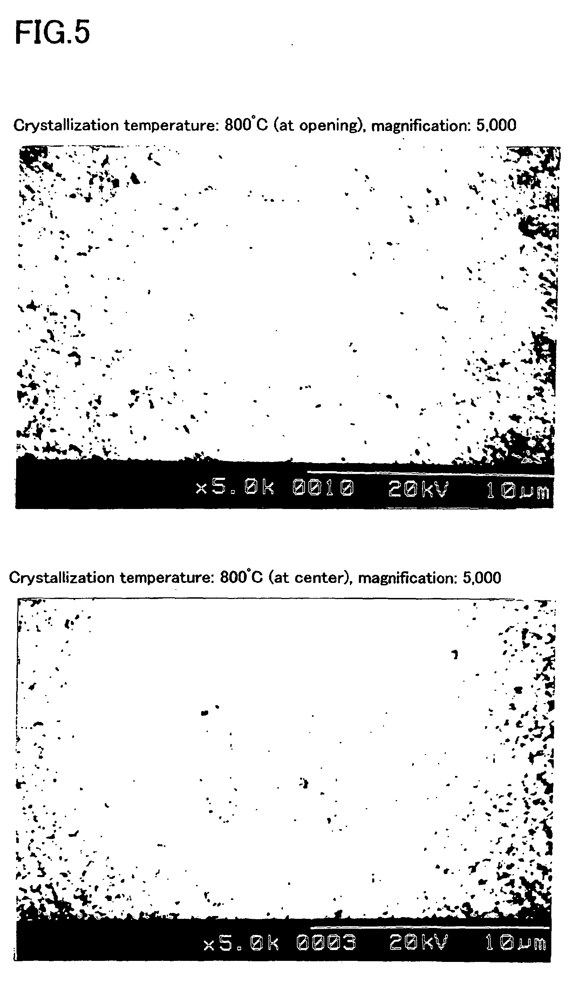

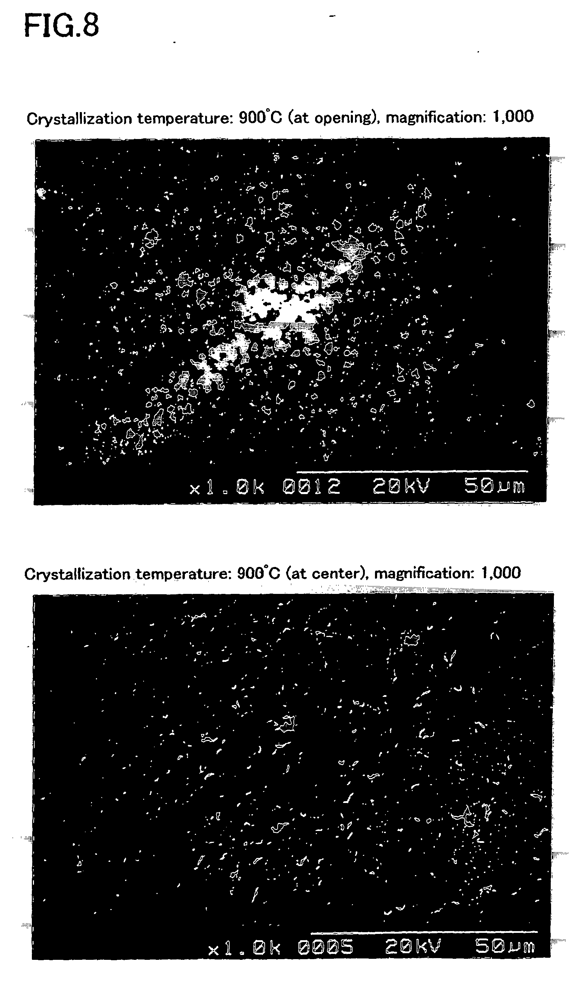

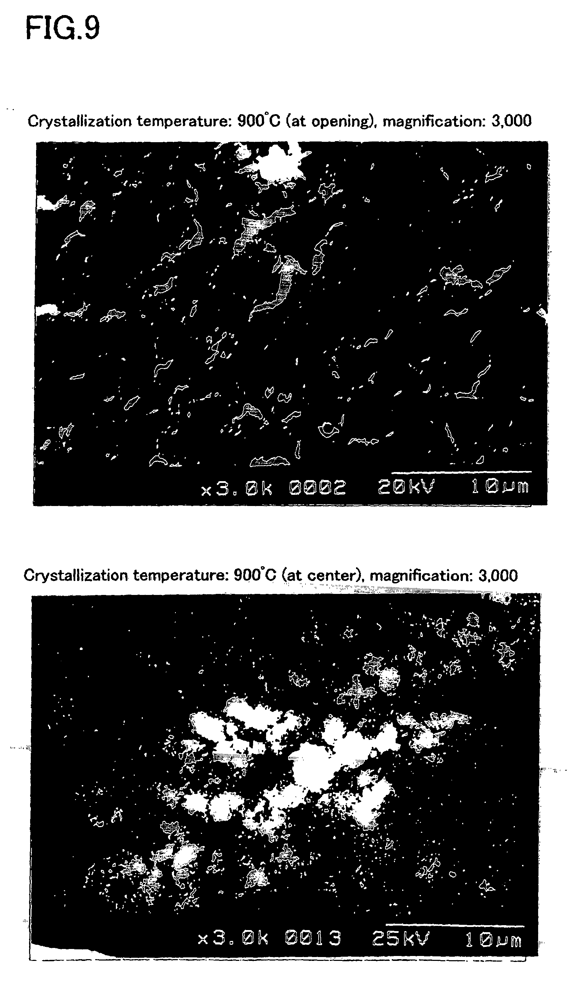

FIGs. 5, 6, and 7 show electron micrographs of the inner surfaces of bowl-shaped products formed from glass-ceramics prepared in Test 3. FIGs. 8 and 9 show electron micrographs of the inner surfaces of other bowl-shaped products formed from glass-ceramics prepared in Test 3.

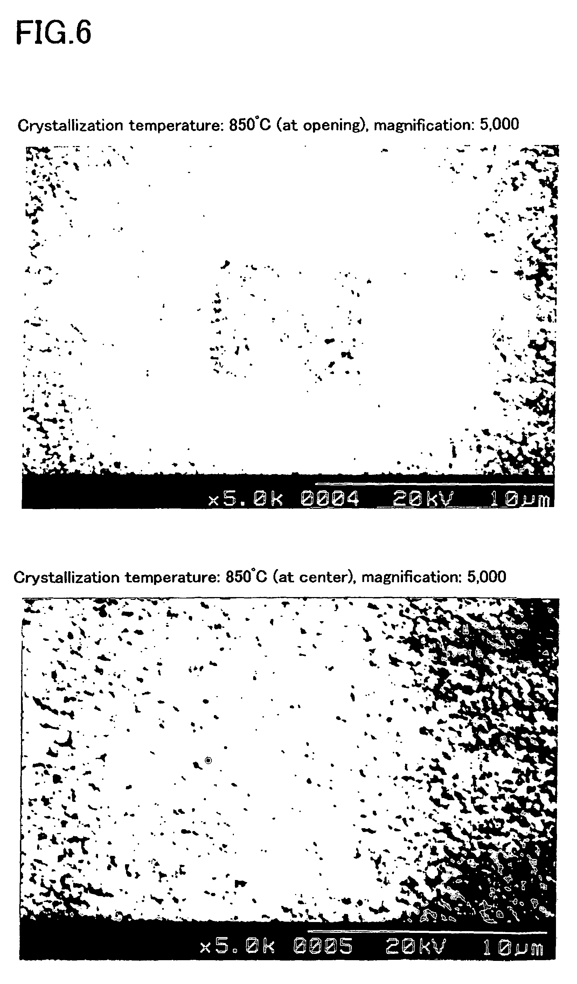

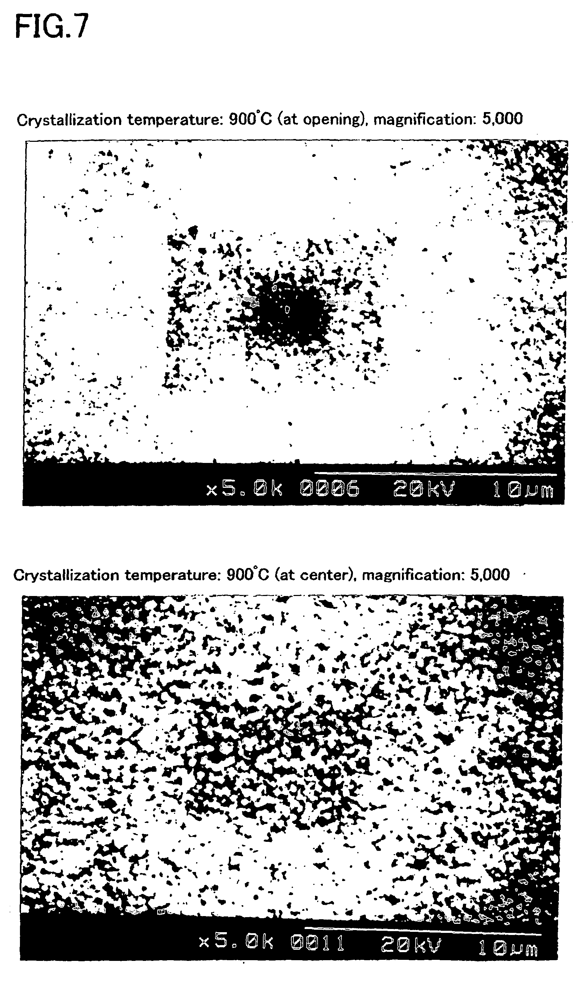

The electron micrographs of FIG. 5 show the configuration of the inner surface of a bowl-shaped glass product No. 20 (Li₂O content: 0.41 wt.%, K₂O content: 0.49 wt.%, crystallization temperature: 800°C) in Test 3, taken at the opening and the center of the bowl-shaped product. The electron micrographs of FIG. 6 show the configuration of the inner surface of a bowl-shaped glass product No. 21 (Li₂O content: 0.41 wt.%, K₂O content: 0.49 wt.%, crystallization temperature: 850°C) in Test 3, taken at the opening and the center of the bowl-shaped product. The electron micrographs of FIG. 7 show the configuration of the inner surface of a bowl-shaped glass product No. 22 (Li₂O content: 0.41 wt.%, K₂O content: 0.49 wt.%, crystallization temperature: 900°C) in Test 3, taken at the opening and the center of the bowl-shaped product.

The electron micrographs of FIGs. 8 and 9 show the configuration of the inner surface of a bowl-shaped glass product No. 25 (Li₂O content: 0.00 wt.%, K₂O content: 0.00 wt.%, crystallization temperature: 900°C) in Test 3, taken at the opening and the center of the bowl-shaped product. The electron micrographs of FIGs. 8 and 9 are taken at magnifications of 1,000 and 3,000, respectively.

In these electron micrographs, the expressions "× 1.0 k, " "× 3.0 k," and "× 5.0 k" refer to a magnification of 1,000, a magnification of 3,000, and a magnification of 5,000, respectively; the expressions "20 kV" and "25 kV" refer to acceleration voltages; and the expressions "10 µm" and "50 µm" refer to the scales of white lines. Comparison of crystal grain sizes on the basis of the scales reveals that the size of crystal grains in the inner surface of the glass product containing appropriate amounts of Li₂O and K₂O is considerably smaller than that of crystal grains in the inner surface of the glass product containing no Li₂O and K₂O. The results show that the size of crystal grains in the former glass product falls within a range of 0.1 to 1.0 µm, and the size of crystal grains in the latter glass product exceeds 1.0 µm.

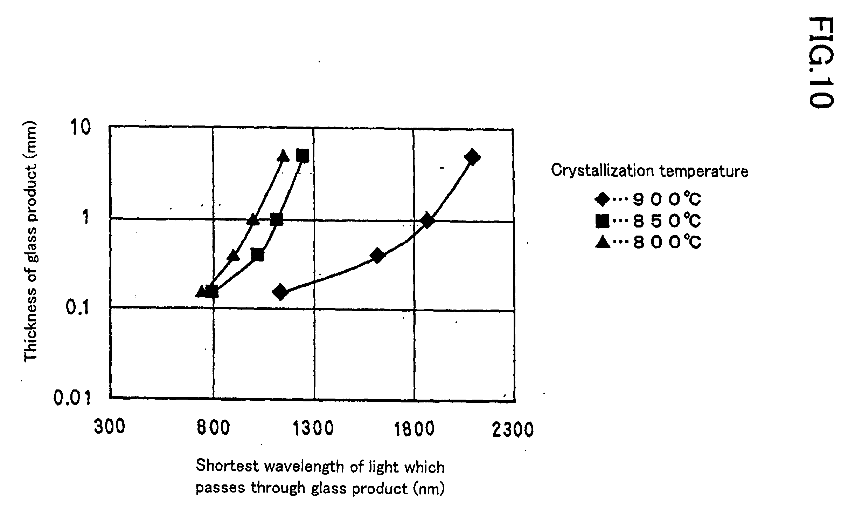

FIG. 10 is a graph showing spectroscopic properties of plate-like glass products formed from glass-ceramics. The graph shows the relation between thicknesses (mm) of plate-like glass products, the shortest wavelengths (nm) of light which passes through the products, and crystallization temperatures, the products having different thicknesses and being formed and crystallized under the same conditions as employed for the glass product No. 20 (crystallization temperature: 800°C), the glass product No. 21 (crystallization temperature: 850°C), and the glass product No. 22 (crystallization temperature: 900°C) in Test 3.

As shown in the graph of FIG. 10, regulation of the crystallization temperature enables formation of different glass products, the products differing in terms of the shortest wavelengths of light which passes therethrough. In addition, when the crystallization temperature is increased, the shortest wavelength of light which passes through the resultant glass product is shifted to a longer wavelength side. When a glass product of glass-ceramic is employed as a reflecting mirror substrate, the substrate preferably transmits no visible light or very little visible light. In such a reflecting mirror substrate exhibiting preferable optical properties, the shortest wavelength of light which passes through a glass-ceramic constituting the substrate is at least 800 nm when the glass-ceramic has a thickness of 0.1 mm. The glass-ceramic can be easily obtained by regulating the crystallization temperature of a glass product.

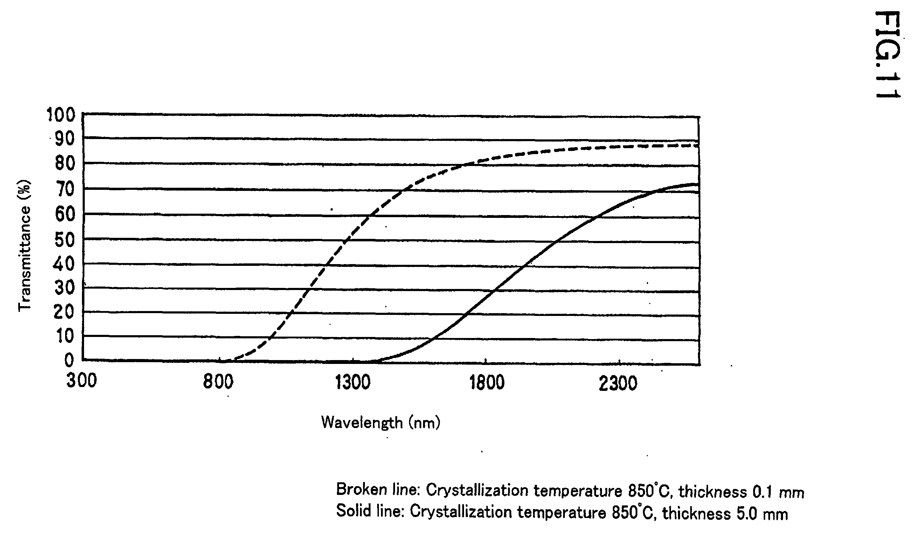

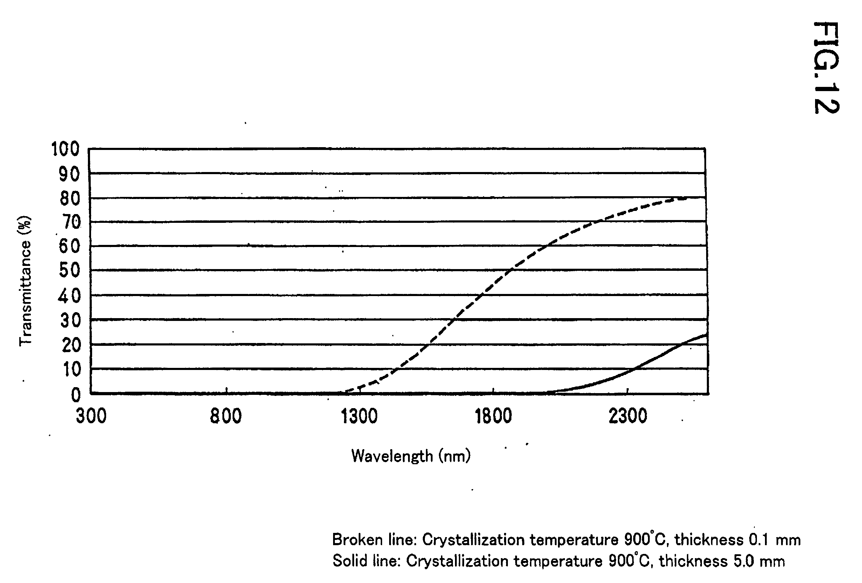

FIGs. 11 and 12 are graphs showing spectroscopic properties of plate-like glass products formed from glass-ceramics. The graphs show the relation between the wavelengths (nm) of light which passes through plate-like glass products and the transmittances (%) of the light, the products having thicknesses of 0.1 mm and 5.0 mm and being formed and crystallized under the same conditions as employed for the glass product No. 21 (crystallization temperature: 850°C) and the glass product No. 22 (crystallization temperature: 900°C) in Test 3.

As shown in the graphs of FIGs. 11 and 12, regulation of crystallization temperature enables formation of glass products having different light transmittances. In addition, the higher the crystallization temperature, the lower the light transmittance of the resultant glass product. When a glass product of glass-ceramic is employed as a reflecting mirror substrate, the substrate preferably transmits no visible light or very little visible light. In such a reflecting mirror substrate exhibiting preferable optical properties, the wavelength of light which passes, at a transmittance of 50%, through a glass-ceramic constituting the substrate is at least 850 nm when the glass-ceramic has a thickness of 0.1 mm. The glass-ceramic can be easily obtained by regulating the crystallization temperature of a glass product.

When the crystallization temperature of glass products is regulated, glass-ceramic products exhibiting different optical properties can be obtained. Through regulation of crystallization temperature, glass-ceramic products exhibiting different levels of flexural strength (Mpa) and elastic modulus (Gpa) can be obtained. A reflecting mirror substrate is used at a considerably high temperature, attributed to heat from a light source lamp, for a long period of time. Therefore, even when a glass-ceramic product is employed as a reflecting mirror substrate, preferably, the substrate maintains high mechanical strength over a long period of time. Such a reflecting mirror substrate exhibiting preferable mechanical properties and thermal properties has flexural strength and elastic modulus satisfying the following.

The reflecting mirror substrate has a flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C. Such a preferable reflecting mirror substrate can be easily obtained by regulating the crystallization temperature.

### (Example)

In the present Example, various glass raw materials containing SiO₂, Al₂O₃, BaO, and TiO₂ as primary components and Li₂O, K₂O, etc. as modification components were prepared. In Tests 1, 2, 3, and 4, glass-ceramics were formed from the glass raw materials; glass properties of the resultant glass products and glass-ceramics were evaluated; and the relation between the amounts of Li₂O and K₂O, crystallization temperature, and the ratio by amount of celsian crystals to hexacelsian crystals were confirmed. Glass-ceramics substantially formed of a celsian crystal phase alone and glass-ceramics substantially formed of a hexacelsian crystal phase alone were selected from the above-formed glass-ceramics; the microstructures of the surfaces (reflection surfaces) of the selected glass-ceramics were observed; and the glass-ceramics were subjected to measurement of mechanical properties and optical properties.

(Test 1): In Test 1, there were prepared glass raw materials in which the amounts of SiO₂, Al₂O₃, BaO, and TiO₂ serving as primary components were held substantially constant, the amounts of B₂O₃, ZnO, and Li₂O serving as modification components were held substantially constant, the amount of Sb₂O₃ was zero, and the amounts of K₂O and Na₂O serving as modification components were appropriately varied; glass products were formed from the glass raw materials; and the resultant glass products were subjected to heat treatment (crystallization treatment) at 800°C, 850°C, and 900°C, to thereby form glass-ceramics. The thus-formed glass-products were subjected to measurement of glass properties (meltability, Tg, Td) and thermal expansion coefficient (α). The glass-ceramics were subjected to measurement of glass properties; i.e., amounts of celsian (Ce) crystals and hexacelsian (HCe) crystals, and thermal expansion coefficient (α), at the above crystallization treatment temperatures.

Table 1 shows the components of the glass raw materials employed in Test 1, and Table 2 shows properties of the glass products formed from the glass raw materials and the glass-ceramics. Meltability of the glass products was evaluated on the basis of two ratings: ○ good meltability, × poor meltability (i.e., a small amount of a non-melted substance was observed), and the results are shown in Table 2. The symbols "Tg" and "Td" in relation to properties of the glass products refer to glass transition point (°C) and glass deformation point (°C), respectively. The symbols "Ce" and "HCe" in relation to properties of the glass-ceramics refer to the intensity (cps) of the first peak of celsian and hexacelsian as measured by means of X-ray diffraction, respectively. The ratio of the peak intensities of celsian and hexacelsian directly shows the ratio of the amounts of celsian crystals and hexacelsian crystals.

**Table 1**

| Glass raw materials (percentage of components) | | | | |
|---|---|---|---|---|
| Component | Glass raw materials | | | |
| | 1 | 2 | 3 | 4 |
| SiO₂ | 40.17 | 40.33 | 40.74 | 41.16 |
| Al₂O₃ | 16.16 | 16.22 | 16.39 | 16.56 |
| BaO | 24.52 | 24.61 | 24.86 | 25.12 |
| TiO₂ | 11.25 | 11.29 | 11.41 | 11.53 |
| B₂O₃ | 3.21 | 3.23 | 3.26 | 3.29 |
| ZnO | 2.12 | 2.22 | 2.24 | 2.26 |
| K₂O | 1.45 | 1.21 | 0.61 | 0.00 |
| Na₂O | 0.95 | 0.81 | 0.41 | 0.00 |
| Sb₂O₃ | 0.00 | 0.00 | 0.00 | 0.00 |
| Li₂O | 0.08 | 0.08 | 0.08 | 0.08 |
| Total | 100.0 | 100.0 | 100.0 | 100.0 |

**Table 2**

| Glass properties | | | | | |
|---|---|---|---|---|---|
| Properties | | Glass raw materials | | | |
| | | 1 | 2 | 3 | 4 |
| Glass product | Meltability | ○ | ○ | × | × |
| | Tg | 680 | 667 | - | - |
| | Td | 736 | 742 | - | - |
| | α | 62.2 | 60.53 | 53.6 | 49.8 |
| Glass-ceramic (800 C) | Ce | - | 0 | 0 | 0 |
| | HCe | - | 392 | 0 | 0 |
| | α | - | - | - | - |
| Glass-ceramic (850 C) | Ce | 1005 | 1325 | 1719 | 1735 |
| | HCe | 2965 | 1283 | 0 | 0 |
| | α | - | 57.0 | 35.0 | 34.7 |
| Glass-ceramic (900 C) | Ce | 1380 | 1652 | 1446 | 1815 |
| | HCe | 567 | 536 | 0 | 0 |
| | α | 44.0 | 49.3 | 34.5 | 35.7 |

(Test 2): In Test 2, there were prepared glass raw materials in which the amounts of SiO₂, Al₂O₃, BaO, and TiO₂ serving as primary components were held substantially constant, the amounts of B₂O₃, ZnO, Li₂O, and Sb₂O₃ serving as modification components were held substantially constant, and the amounts of K₂O and Na₂O serving as modification components were appropriately varied; glass products were formed from the glass raw materials; and the resultant glass products were subjected to heat treatment (crystallization treatment) at 800°C, 850°C, and 900°C, to thereby form glass-ceramics. The thus-formed glass products were subjected to measurement of glass properties (meltability, Tg, Td) and thermal expansion coefficient (α). The glass-ceramics were subjected to measurement of glass properties; i.e., amounts of celsian (Ce) crystals and hexacelsian (HCe) crystals, and thermal expansion coefficient (α), at the above crystallization treatment temperatures.

Table 3 shows the components of the glass raw materials employed in Test 2, and Table 4 shows properties of the glass products formed from the glass raw materials and the glass-ceramics. The terms and symbols in Table 4 correspond to those in Table 2.

**Table 3**

| Glass raw materials (percentage of components) | | | | | | | |
|---|---|---|---|---|---|---|---|
| Component | Glass raw materials | | | | | | |
| | 5 | 6 | 7 | 8 | 9 | 10 | 11 |
| SiO₂ | 40.00 | 40.32 | 40.65 | 40.98 | 40.26 | 40.42 | 40.58 |
| Al₂O₃ | 16.00 | 16.13 | 16.26 | 16.39 | 16.10 | 16.17 | 16.23 |
| BaO | 24.00 | 24.19 | 24.39 | 24.59 | 24.25 | 24.25 | 24.35 |
| TiO₂ | 11.20 | 11.29 | 11.38 | 11.48 | 11.27 | 11.32 | 11.36 |
| B₂O₃ | 3.20 | 3.23 | 3.25 | 3.28 | 3.22 | 3.23 | 3.25 |
| ZnO | 2.40 | 2.42 | 2.44 | 2.46 | 2.42 | 2.43 | 2.44 |
| K₂O | 1.44 | 0.97 | 0.49 | 0.00 | 0.81 | 0.40 | 0.00 |
| Na₂O | 0.96 | 0.65 | 0.33 | 0.00 | 0.97 | 0.97 | 0.97 |
| Sb₂O₃ | 0.40 | 0.40 | 0.41 | 0.41 | 0.40 | 0.40 | 0.41 |
| Li₂O | 0.40 | 0.40 | 0.41 | 0.41 | 0.40 | 0.40 | 0.41 |
| Total | 100.0 | 100.0 | 100.0 | 100.0 | 100.0 | 100.0 | 100.0 |

**Table 4**

| Glass properties | | | | | | | | |
|---|---|---|---|---|---|---|---|---|
| Properties | | Glass raw materials | | | | | | |
| | | 5 | 6 | 7 | 8 | 9 | 10 | 11 |
| Glass product | Meltability | ○ | ○ | ○ | ○ | ○ | ○ | ○ |
| | Tg | 653 | 659 | 665 | 661 | 651 | 658 | 660 |
| | Td | 718 | 726 | 735 | 743 | 730 | 727 | 729 |
| | α | 64.3 | 58.2 | 54.0 | 53.1 | 61.4 | 60.0 | 58.2 |
| Glass-ceramic (800 C) | Ce | 0 | 1315 | 1555 | 1429 | 854 | 1445 | 1491 |
| | HCe | 2652 | 800 | 453 | 320 | 1990 | 296 | 498 |
| | α | - | - | - | - | 62.4 | 39.5 | 47.5 |
| Glass-ceramic (850 C) | Ce | 540 | 1537 | 1720 | 1668 | 1523 | 1662 | 1588 |
| | HCe | 3154 | 392 | 0 | 0 | 802 | 0 | 0 |
| | α | - | 46.5 | 41.3 | 36.6 | 44.1 | 41.5 | 40.6 |
| Glass-ceramic (900 C) | Ce | 1721 | 1771 | 1811 | 1759 | 1692 | 1661 | 1685 |
| | HCe | 755 | 201 | 0 | 0 | 0 | 0 | 0 |
| | α | 62.5 | 41.0 | 39.9 | 38.2 | 42.5 | 41.7 | 39.7 |

(Test 3): In Test 3, there were prepared glass raw materials in which the amounts of SiO₂, Al₂O₃, BaO, TiO₂, ZnO, B₂O₃, and Sb₂O₃ were held substantially constant, the amounts of P₂O₅ and Bi₂O₃ were zero, the amount of K₂O was zero or 0.49 wt.%, and the amounts of Li₂O, K₂O, and Na₂O were appropriately varied; bowl-shaped glass products to serve as reflecting mirror substrates were formed from the glass raw materials; and the resultant glass products were subjected to heat treatment (crystallization treatment) at different temperatures, so as to transform glasses constituting the products into glass-ceramics, thereby forming reflecting mirror substrates (glass-ceramic products).

The relation between crystallization temperature and the ratio of crystal phases of each of the resultant glass products was obtained. The results are shown in Tables 5 and 6. The graph of FIG. 3 shows the relation between Li₂O content, crystallization temperature, and the ratio of crystal phases, when the K₂O content is less than 0.5 wt.%. Electron micrographs of the inner surfaces of some glass products were taken. FIGs. 5 through 9 show the electron micrographs.

**Table 5**

| Properties of glass products | | | | | | | | | |
|---|---|---|---|---|---|---|---|---|---|
| Component | Glass raw materials | | | | | | | | |
| | 12 | 13 | 14 | 15 | 16 | 17 | 18 | 19 | 20 |
| SiO₂ | 40.98 | 40.98 | 40.98 | 40.82 | 40.82 | 40.82 | 41.42 | 41.42 | 40.65 |
| Al₂O₃ | 16.39 | 16.39 | 16.39 | 16.33 | 16.33 | 16.33 | 16.57 | 16.57 | 16.26 |
| BaO | 24.59 | 24.59 | 24.59 | 24.49 | 24.49 | 24.49 | 24.85 | 24.85 | 24.39 |
| TiO₂ | 11.48 | 11.48 | 11.48 | 11.43 | 11.43 | 11.43 | 11.53 | 11.53 | 11.38 |
| B₂O₃ | 3.28 | 3.28 | 3.28 | 3.27 | 3.27 | 3.27 | 3.29 | 3.29 | 3.25 |
| ZnO | 2.46 | 2.46 | 2.46 | 2.45 | 2.45 | 2.45 | 2.26 | 2.26 | 2.44 |
| K₂O | 0.00 | 0.00 | 0.00 | 0.00 | 0.00 | 0.00 | 0.00 | 0.00 | 0.49 |
| Na₂O | 0.00 | 0.00 | 0.00 | 0.00 | 0.00 | 0.00 | 0.00 | 0.00 | 0.33 |
| Sb₂O₃ | 0.41 | 0.41 | 0.41 | 0.40 | 0.40 | 0.40 | 0.00 | 0.00 | 0.41 |
| Li₂O | 0.41 | 0.41 | 0.41 | 0.82 | 0.82 | 0.82 | 0.08 | 0.08 | 0.41 |
| Crystallization temp. | 800 | 850 | 900 | 800 | 850 | 900 | 850 | 900 | 800 |
| Ce (cps) | 1429 | 1668 | 1759 | 1494 | 1711 | 1746 | 1735 | 1815 | 1555 |
| HCe (cps) | 320 | 0 | 0 | 421 | 0 | 0 | 0 | 0 | 453 |
| Ce ratio (%) | 82 | 100 | 100 | 78 | 100 | 100 | 100 | 100 | 77 |

**Table 6**

| Properties of glass products | | | | | | | | |
|---|---|---|---|---|---|---|---|---|
| Component | Glass raw materials | | | | | | | |
| | 21 | 22 | 23 | 24 | 25 | 26 | 27 | 28 |
| SiO₂ | 40.65 | 40.65 | 40.75 | 40.75 | 40.75 | 40.66 | 40.66 | 40.66 |
| Al₂O₃ | 16.26 | 16.26 | 16.30 | 16.30 | 16.30 | 16.27 | 16.27 | 16.27 |
| BaO | 24.39 | 24.39 | 24.45 | 24.45 | 24.45 | 24.40 | 24.40 | 24.40 |
| TiO₂ | 11.38 | 11.38 | 11.41 | 11.41 | 11.41 | 11.38 | 11.38 | 11.38 |
| B₂O₃ | 3.25 | 3.25 | 3.26 | 3.26 | 3.26 | 3.26 | 3.26 | 3.26 |
| ZnO | 2.44 | 2.44 | 2.45 | 2.45 | 2.45 | 2.45 | 2.45 | 2.45 |
| K₂O | 0.49 | 0.49 | 0.00 | 0.00 | 0.00 | 0.00 | 0.00 | 0.00 |
| Na₂O | 0.33 | 0.33 | 0.97 | 0.97 | 0.97 | 0.97 | 0.97 | 0.97 |
| Sb₂O₃ | 0.41 | 0.41 | 0.41 | 0.41 | 0.41 | 0.41 | 0.41 | 0.41 |
| Li₂O | 0.41 | 0.41 | 0.00 | 0.00 | 0.00 | 0.20 | 0.20 | 0.20 |
| Crystallization temp. | 850 | 900 | 800 | 850 | 900 | 800 | 850 | 900 |
| Ce | 1720 | 1811 | 475 | 1328 | 1650 | 535 | 838 | 1618 |
| HCe | 0 | 0 | 2918 | 692 | 0 | 3647 | 2792 | 0 |
| Ce ratio | 100 | 100 | 14 | 66 | 100 | 13 | 23 | 100 |

(Test 4): In Test 4, there were prepared glass raw materials in which the amounts of SiO₂, Al₂O₃, BaO, TiO₂, ZnO, B₂O₃, and Sb₂O₃ were held substantially constant, the amounts of P₂O₅ and Bi₂O₃ were zero, the amount of Li₂O was held constant (about 0.4 wt.%), and the amounts of K₂O and Na₂O were appropriately varied; bowl-shaped glass products to serve as reflecting mirror substrates were formed from the glass raw materials; and the resultant glass products were subjected to heat treatment (crystallization treatment) at different temperatures, so as to transform glasses constituting the products into glass-ceramics, thereby forming reflecting mirror substrates (glass-ceramic products). The relation between crystallization temperature and the ratio of crystal phases of each of the resultant glass products was obtained. The results are shown in Tables 7 and 8. The graph of FIG. 4 shows the relation between K₂O content, crystallization temperature, and the ratio of crystal phases, when the Li₂O content is held constant.

**Table 7**

| Properties of glass products | | | | | | | | | |
|---|---|---|---|---|---|---|---|---|---|
| Component | Glass raw materials | | | | | | | | |
| | 29 | 30 | 31 | 32 | 33 | 34 | 35 | 36 | 37 |
| SiO₂ | 40.98 | 40.98 | 40.98 | 40.65 | 40.65 | 40.65 | 40.57 | 40.57 | 40.57 |
| Al₂O₃ | 16.39 | 16.39 | 16.39 | 16.26 | 16.26 | 16.26 | 16.23 | 16.23 | 16.23 |
| BaO | 24.59 | 24.59 | 24.59 | 24.39 | 24.39 | 24.39 | 24.34 | 24.34 | 24.34 |
| TiO₂ | 11.48 | 11.48 | 11.48 | 11.38 | 11.38 | 11.38 | 11.36 | 11.36 | 11.36 |
| B₂O₃ | 3.28 | 3.28 | 3.28 | 3.25 | 3.25 | 3.25 | 3.25 | 3.25 | 3.25 |
| ZnO | 2.46 | 2.46 | 2.46 | 2.44 | 2.44 | 2.44 | 2.44 | 2.44 | 2.44 |
| K₂O | 0.00 | 0.00 | 0.00 | 0.49 | 0.49 | 0.49 | 0.60 | 0.60 | 0.60 |
| Na₂O | 0.00 | 0.00 | 0.00 | 0.33 | 0.33 | 0.33 | 0.41 | 0.41 | 0.41 |
| Sb₂O₃ | 0.41 | 0.41 | 0.41 | 0.41 | 0.41 | 0.41 | 0.40 | 0.40 | 0.40 |
| Li₂O | 0.41 | 0.41 | 0.41 | 0.41 | 0.41 | 0.41 | 0.40 | 0.40 | 0.40 |
| Crystallization temp. | 800 | 850 | 900 | 800 | 850 | 900 | 800 | 850 | 900 |
| Ce | 1429 | 1668 | 1759 | 1555 | 1720 | 1811 | 1555 | 1720 | 1811 |
| HCe | 320 | 0 | 0 | 453 | 0 | 0 | 453 | 0 | 0 |
| Ce ratio | 82 | 100 | 100 | 77 | 100 | 100 | 77 | 100 | 100 |

**Table 8**

| Properties of glass products | | | | | | | | | |
|---|---|---|---|---|---|---|---|---|---|
| Component | Glass raw materials | | | | | | | | |
| | 38 | 39 | 40 | 41 | 42 | 43 | 44 | 45 | 46 |
| SiO₂ | 40.32 | 40.32 | 40.32 | 40.01 | 40.01 | 40.01 | 40.00 | 40.00 | 40.00 |
| Al₂O₃ | 16.13 | 16.13 | 16.13 | 16.06 | 16.06 | 16.06 | 16.00 | 16.00 | 16.00 |
| BaO | 24.19 | 24.19 | 24.19 | 24.08 | 24.08 | 24.08 | 24.00 | 24.00 | 24.00 |
| TiO₂ | 11.29 | 11.29 | 11.29 | 11.17 | 11.17 | 11.17 | 11.20 | 11.20 | 11.20 |
| B₂O₃ | 3.23 | 3.23 | 3.23 | 3.19 | 3.19 | 3.19 | 3.20 | 3.20 | 3.20 |
| ZnO | 2.42 | 2.42 | 2.42 | 2.19 | 2.19 | 2.19 | 2.40 | 2.40 | 2.40 |
| K₂O | 0.97 | 0.97 | 0.97 | 1.43 | 1.43 | 1.43 | 1.44 | 1.44 | 1.44 |
| Na₂O | 0.65 | 0.65 | 0.65 | 0.95 | 0.95 | 0.95 | 0.96 | 0.96 | 0.96 |
| Sb₂O₃ | 0.40 | 0.40 | 0.40 | 0.40 | 0.40 | 0.40 | 0.40 | 0.40 | 0.40 |
| Li₂O | 0.40 | 0.40 | 0.40 | 0.40 | 0.40 | 0.40 | 0.40 | 0.40 | 0.40 |
| Crystallization temp. | 800 | 850 | 900 | 800 | 850 | 900 | 800 | 850 | 900 |
| Ce | 1315 | 1537 | 1771 | 390 | 1485 | 1184 | 0 | 540 | 1721 |
| HCe | 800 | 392 | 201 | 2775 | 578 | 1838 | | 3154 | 755 |
| Ce ratio | 62 | 80 | 90 | 12 | 72 | 39 | 0 | 15 | 70 |

(Test 5): In Test 5, plate-like glass products (width: 4 mm, length: 40 mm) having different thicknesses were formed and crystallized under the same conditions as employed for a glass product No. 20 (crystallization temperature: 800°C), a glass product No. 21 (crystallization temperature: 850°C), and a glass product No. 22 (crystallization temperature: 900°C) in Test 3, and mechanical properties, thermal properties, and optical properties of the resultant glass products were evaluated. In order to evaluate mechanical properties and thermal properties, a glass product (thickness: 3 mm) which had been crystallized at a crystallization temperature of 850°C was subjected to a four-point bending test (JIS 1601), and the flexural strength and elastic modulus of the product were measured at different temperatures. The results are shown in Table 9.

**Table 9**

| Mechanical properties | | |
|---|---|---|
| Temperature (°C) | Flexural strength (Mpa) | Elastic modulus (Gpa) |
| Room temperature | 125-155 | 80-85 |
| 300 | 145-175 | 70-75 |
| 600 | 180-220 | 35-40 |

In order to evaluate optical properties, for each of glass products (thickness: 0.15 to 5 mm), which had been crystallized at crystallization temperatures of 800°C, 850°C, and 900°C, the relation between the shortest wavelength of light which passes therethrough and the thickness of the product (i.e., first optical property) was obtained, and the relation between the wavelengths of light which passes therethrough and the transmittances of the light (i.e., second optical property) was obtained. The results of measurement of the first optical property are shown in Table 10 and the graph of FIG. 10, and the results of measurement of the second optical property are shown in the graphs of FIGs. 11 and 12.

**Table 10**

| Shortest wavelength (nm) of light which passes through glass product | | | |
|---|---|---|---|
| Thickness (mm) | Crystallization temperature ( C) | | |
| | 800 | 850 | 900 |
| 5 | 1150 | 1250 | 2100 |
| 1 | 1000 | 1120 | 1870 |
| 0.4 | 900 | 1020 | 1620 |
| 0.15 | 750 | 800 | 1130 |

## Claims

1. A glass-ceramic whose crystal phase is formed of celsian alone, the glass-ceramic having the following composition:
35 - 55 wt% SiO₂;
7 - 25 wt% Al₂O₃;
18 - 38 wt% BaO;
8 - 15 wt% TiO₂; and
there being a modification component including Li₂O and optionally including K₂O,
wherein the amount of Li₂O is within the range 0.05 - 1.0 wt% and the amount of K₂O, if present, is 1.5 wt% or less.

2. A glass-ceramic according to claim 1, wherein the modification component further includes one or more compounds selected from Na₂O, P₂O₅, B₂O₃, Sb₂O₃, ZnO and Bi₂O₃.

3. A reflecting mirror substrate on which a thin reflection film is deposited to thereby form a reflecting mirror, the substrate being formed from a glass-ceramic according to claim 1 or 2.

4. A reflecting mirror substrate according to claim 3, wherein the glass-ceramic constituting the substrate has a crystal grain size of 0.1 to 1 µm.

5. A reflecting mirror substrate according to claim 3 or 4, which has a flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C.

6. A reflecting mirror substrate according to claim 4 or 5, wherein the shortest wavelength of light which passes through the glass-ceramic constituting the substrate is at least 800 nm when the glass-ceramic has a thickness of 0.1 mm.

7. A reflecting mirror substrate according to claim 3 or 4, wherein the wavelength of light which passes, at a transmittance of 50%, through the glass-ceramic constituting the substrate is at least 850 nm when the glass-ceramic has a thickness of 0.1 mm.

8. A reflecting mirror substrate according to claim 3 or 4, which has a flexural strength of 125 to 155 Mpa at room temperature, 145 to 175 Mpa at 300°C, and 180 to 220 Mpa at 600°C, and an elastic modulus of 80 to 85 Gpa at room temperature, 70 to 75 Gpa at 300°C, and 35 to 40 Gpa at 600°C, wherein the shortest wavelength of light which passes through the glass-ceramic constituting the substrate is at least 800 nm when the glass-ceramic has a thickness of 0.1 mm, and the wavelength of light which passes, at a transmittance of 50%, through the glass-ceramic constituting the substrate is at least 850 nm when the glass-ceramic has a thickness of 0.1 mm.

9. A reflecting mirror substrate according to claim 3 or 4, which has a thickness of 3 to 6 mm, wherein the shortest wavelength of light which passes through the glass-ceramic constituting the substrate is at least 850 nm.

10. A reflecting mirror substrate according to claim 9, wherein the shortest wavelength of light which passes through the glass-ceramic constituting the substrate is at least 1,000 nm.

11. A reflecting mirror substrate according to any one of claims 3 to 10, wherein the glass-ceramic constituting the substrate has a thermal expansion coefficient α (x 10⁻⁷/°C) of 30 to 45.

## Patentansprüche

1. Glaskeramik, deren Kristallphase aus Celsian alleine besteht, wobei die Glaskeramik die folgende Zusammensetzung aufweist:
35 - 55 Gew.-% SiO₂;
7 - 25 Gew.-% Al₂O₃;
18 - 38 Gew.-% BaO;
8 - 15 Gew.-% TiO₂; und
eine Modifikationskomponente vorhanden ist, die Li₂O und gegebenenfalls K₂O umfasst,
worin die Menge an Li₂O im Bereich von 0,05 - 1,0 Gew.-% und die Menge an K₂O, falls vorhanden, 1,5 Gew.-% oder weniger beträgt.

2. Glaskeramik nach Anspruch 1, worin die Modifikationskomponente außerdem eine oder mehrere aus Na₂O, P₂O₅, B₂O₃, Sb₂O₃, ZnO und Bi₂O₃ ausgewählte Komponente(n) umfasst.

3. Reflektorspiegelsubstrat, worauf eine dünne Reflexfolie aufgebracht ist, um so einen Reflektorspiegel herzustellen, wobei das Substrat aus einer Glaskeramik nach Anspruch 1 oder 2 gebildet ist.

4. Reflektorspiegelsubstrat nach Anspruch 3, worin die Glaskeramik, die das Substrat darstellt, eine Kristallkorngröße von 0,1 bis 1 µm aufweist.

5. Reflektorspiegelsubstrat nach Anspruch 3 oder 4, das eine Biegefestigkeit von 125 bis 155 MPa bei Raumtemperatur, 145 bis 175 MPa bei 300 °C und 180 bis 220 MPa bei 600 °C sowie einen Elastizitätsmodul von 80 bis 85 GPa bei Raumtemperatur, 70 bis 75 GPa bei 300 °C und 35 bis 40 GPa bei 600 °C aufweist.

6. Reflektorspiegelsubstrat nach Anspruch 4 oder 5, worin die kürzeste Wellenlänge von Licht, das durch die das Substrat darstellende Glaskeramik tritt, zumindest 800 nm beträgt, wenn die Glaskeramik eine Dicke von 0,1 mm aufweist.

7. Reflektorspiegelsubstrat nach Anspruch 3 oder 4, worin die Wellenlänge von Licht, das bei einer Durchlässigkeit von 50 % durch die das Substrat darstellende Glaskeramik durchtritt, zumindest 850 nm beträgt, wenn die Glaskeramik eine Dicke von 0,1 mm aufweist.

8. Reflektorspiegelsubstrat nach Anspruch 3 oder 4, das eine Biegefestigkeit von 125 bis 155 MPa bei Raumtemperatur, 145 bis 175 MPa bei 300 °C und 180 bis 220 MPa bei 600 °C sowie einen Elastizitätsmodul von 80 bis 85 GPa bei Raumtemperatur, 70 bis 75 GPa bei 300 °C und 35 bis 40 GPa bei 600 °C aufweist, worin die kürzeste Wellenlänge von Licht, das durch die das Substrat darstellende Glaskeramik tritt, zumindest 800 nm beträgt, wenn die Glaskeramik eine Dicke von 0,1 mm aufweist, und die Wellenlänge von Licht, das bei einer Durchlässigkeit von 50 % durch die das Substrat darstellende Glaskeramik durchtritt, zumindest 850 nm beträgt, wenn die Glaskeramik eine Dicke von 0,1 mm aufweist.

9. Reflektorspiegelsubstrat nach Anspruch 3 oder 4, das eine Dicke von 3 bis 6 mm aufweist, worin die kürzeste Wellenlänge von Licht, das durch die das Substrat darstellende Glaskeramik tritt, zumindest 850 nm beträgt.

10. Reflektorspiegelsubstrat nach Anspruch 9, worin die kürzeste Wellenlänge von Licht, das durch die das Substrat darstellende Glaskeramik durchtritt, zumindest 1.000 nm beträgt.

11. Reflektorspiegelsubstrat nach einem der Ansprüche 3 bis 10, worin die das Substrat darstellende Glaskeramik einen Wärmeausdehnungskoeffizienten α (x 10⁻⁷/°C) von 30 bis 45 aufweist.

## Revendications

1. Une vitrocéramique dont la phase cristalline est formée seulement de celsiane, la vitrocéramique ayant la composition suivante:
35 - 55 % en poids de SiO₂;
7 - 25 % en poids de Al₂O_{3;}
18 - 38 % en poids de BaO;
8 - 15 % en poids de TiO₂, et
avec un composé de modification comprenant Li₂O et comprenant facultativement K₂O,
où la quantité de Li₂O est à l'intérieur de la gamme de 0, 05 - 1,0% en poids et où la quantité de K₂O, s'il y en a, est de 1,5% en poids ou moins.

2. Une vitro céramique selon la revendication 1, dans laquelle le composé de modification comprend en outre un ou plusieurs composés choisis parmi Na₂O, P₂O₅, B₂O₃, Sb₂O₃, ZnO et Bi₂O₃.

3. Un substrat de miroir réfléchissant sur lequel est déposé un mince film réflecteur de manière ainsi à former un miroir réfléchissant, le substrat étant réalisé à partir d'une vitrocéramique selon la revendication 1 ou 2.

4. Un substrat de miroir réfléchissant selon la revendication 3, dans lequel la vitrocéramique constituant le substrat a une granulométrie cristalline de 0,1 à 1 µm.

5. Un substrat de miroir réfléchissant selon la revendication 3 ou 4, qui présente une résistance à la flexion de 125 à 155 Mpa à température ambiante, 145 à 175 Mpa à 300°C et 180 à 220 Mpa à 600°C, ainsi qu'un module élastique de 80 à 85 Gpa à température ambiante, 70 à 75 Gpa à 300°C et 35 à 40 Gpa à 600°C.

6. Un substrat de miroir réfléchissant selon la revendication 4 ou 5, dans lequel la plus courte longueur d'onde de la lumière qui passe à travers la vitrocéramique constituant le substrat est d'au moins 800 nm lorsque la vitrocéramique à une épaisseur de 0,1 mm.

7. Un substrat de miroir réfléchissant selon la revendication 3 ou 4, dans lequel la longueur d'onde de la lumière qui passe, à un facteur de transmission de 50%, à travers la vitrocéramique constituant le substrat est d'au moins 850 nm lorsque la vitrocéramique a une épaisseur de 0,1 mm.

8. Un substrat de miroir réfléchissant selon la revendication 3 ou 4, qui présente une résistance à la flexion de 125 à 155 MPa à température ambiante, 145 à 175 mPa à 300°C et 180 à 220 MPa à 600°C, ainsi qu'un module élastique de 80 à 85 Gpa à température ambiante, 70 à 75 Gpa à 300°C et 35 à 40 Gpa à 600°C, dans lequel la plus courte longueur d'onde de la lumière qui passe à travers la vitrocéramique constituant le substrat est d'au moins 800 nm lorsque la vitrocéramique à une épaisseur de 0,1 mm, et où la longueur d'onde de la lumière qui passe, à un facteur de transmission de 50%, à travers la vitrocéramique constituant le substrat est d'au moins 850 nm lorsque la vitrocéramique a une épaisseur de 0,1 mm.

9. Un substrat de miroir réfléchissant selon la revendication 3 ou 4, qui présente une épaisseur de 3 à 6 mm, dans lequel la plus courte longueur d'onde de la lumière qui passe à travers la vitrocéramique constituant le substrat est d'au moins 850 mm.

10. Un substrat de miroir réfléchissant selon la revendication 9, dans lequel la plus courte longueur d'onde de la lumière qui passe à travers la vitrocéramique constituant le substrat est d'au moins 1 000 nm.

11. Un substrat de miroir réfléchissant selon l'une quelconque des revendications 3 à 10, dans lequel la vitrocéramique constituant le substrat a un coefficient de dilatation thermique α (x 10⁻⁷/°C) de 30 à 45.
